(19)

**Europäisches Patentamt**

**European Patent Office**

**Office européen des brevets**

(11) **EP 4 742 486 A1**

(12) **EUROPEAN PATENT APPLICATION**

(43) Date of publication:
**13.05.2026 Bulletin 2026/20**

(21) Application number: **24211860.2**

(22) Date of filing: **08.11.2024**

(51) International Patent Classification (IPC):
*H02J 3/38* (2026.01)   *H02J 3/00* (2026.01)
*H02J 3/32* (2026.01)   *H02M 1/32* (2007.01)
*H02M 5/458* (2006.01)   *H02M 7/797* (2006.01)
*H02J 9/06* (2006.01)

(52) Cooperative Patent Classification (CPC):
**H02J 3/32; H02J 3/001; H02J 3/381; H02M 1/007;
H02M 1/32; H02M 5/4585; H02M 7/797;**
H02J 9/062; H02J 2101/24

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **CE+T Power Luxembourg SA**
**9911 Troisvierges (LU)**

(72) Inventors:
• **MILSTEIN, François**
**4000 LIEGE (BE)**

• **JOANNES, Thierry**
**4400 FLEMALLE (BE)**
• **FUCITO, Amory**
**4630 SOUMAGNE (BE)**
• **VAN DOORNE, Bente**
**4845 JALHAY (BE)**
• **FREBEL, Fabrice**
**4020 WANDRE (BE)**
• **BIDAINE, Benoit**
**4671 SAIVE (BE)**

(74) Representative: **AWA Benelux**
**Parc d'affaires Zénobe Gramme - Bât. K
Square des Conduites d'Eau 1-2
4020 Liège (BE)**

(54) **SYSTEM AND METHOD FOR PREVENTING RENEWABLE SOURCES POWER TRANSFER FAULTS IN A GRID-CONNECTED CONVERTER**

(57)    The present invention is related to an electric power system for controlling and improving power availability to a load (5), said system comprising a renewable energy generating unit (1) for producing DC power, and connected to an external non-controlled inverter (2) ; an AC load (5) ; an electric energy storage unit (4) ; a converter (3) having a bidirectional output AC port (34), a DC port (33) and, optionally, an input AC port (32) that may be grid-interactive ; and optionally an AC grid (8) ;
wherein said input AC port (32) is normally connected to the AC grid (8) as the case may be, said bidirectional output AC port (34) is normally connected to the inverter (2) and to the load (5) and said DC port (33) is normally connected to the electric energy storage unit (4) ; characterized in that the converter (3) is equipped with an internal device (6) which is capable to store or dissipate an energy amount otherwise entering into the converter (3) that goes up to or above the nominal power of the converter (3) multiplied by a predetermined time, preferably 200ms, and more preferably 300 ms.

FIG. 3

# Description

## Field of the Invention

The present invention relates to systems equipped with electrical source (e.g. grid, genset) - connected converters and to methods capable, in such systems, to manage parameters governing power transfer between an energy generation system and the electrical source, in particular in fault conditions or load impact.

The range of applications producing DC current to be converted to AC current in a grid encompasses for example photovoltaic (PV) generation systems, wind generation systems, micro-hydroelectricity generation systems, biomass generators, fuel cells, renewable energy storage systems such as batteries and other renewable energy systems, and high-voltage DC (HVDC) transmission.

## Background and Prior Art

Today, there is a worldwide endeavour to substitute traditional energy sources based on fossil fuels with renewable energy. This wide-ranging transformation stems from the consensus that fossil fuels have been identified as major contributors mainly to environmental contamination, climate change, and greenhouse effect. With the significant development of renewable energy sources, there has been a corresponding increase in the demand for power converters, as the conversion of direct current energy into alternating current energy becomes imperative. Typically, grid-connected converters are required to achieve this conversion. Grid-connected converters are frequently utilized in energy transfer management of systems such as those in which renewable energy sources or storage installations are interconnected with an electrical grid.

Usually the electrical grids mentioned in this application are utility AC grids, also known as electrical utility grids, which are generally the systems responsible for generating, transmitting, and distributing electricity to consumers. These grids can vary in structure, size, and complexity depending on the geographic region, population density, and available resources. Some examples of AC utility grids are national grids, regional grids, microgrids, smartgrids, etc.

Further, based on two observations, firstly the generalized need for electrification in replacement of fossil fuels and secondly that storage systems are becoming popular for businesses and homes to store energy from solar panels for a future use, an interest is seen for two parties to collaborate.

On the one side, the AC electrical grid has a demand for energy while on the other side, the prosumers have an excess of energy that shall be stored and managed. In this respect regulators have taken proactive measures, such as implementing so-called grid-interactive certifications, to facilitate this collaboration.

There are several standards for grid-interactive energy storage systems (e.g. EN50549, VDE4105 and AS4777.2). These certifications ensure the safety, interoperability, and compatibility of the systems with the electrical grid. They aim at harmonizing the technical requirements for the connection of decentralized energy resources capable of operating in parallel with the grid.

Concretely, the "grid-interactive" functionality of an energy storage system allows it to work seamlessly with the electrical grid. This functionality provides several benefits : increased energy efficiency (reduce energy waste and increase overall energy efficiency) ; improved grid stability (stabilize the electrical grid, even out the fluctuations in the grid caused by the unpredictable nature of renewable energy sources and reduce the need for traditional power plants) and revenue generation for prosumers with grid-interactive energy storage systems (power utilities offering incentives to participate in balancing services, so providing an additional source of revenue).

The applicant already brought to market a power converter module, branded as Sierra™ and equipped with the so-called ECI™ technology (for *Enhanced Conversion Innovation*), which will be simply named below as "the (grid-interactive) converter". This converter is able to play a key role in the needed solution.

It is a triple port bidirectional AC/DC/AC converter, with two independent AC ports.

ECI™ is a UPS modular technology with: no single point of failure; high MTBF; true redundancy; best in-class protection to disturbances; and no maintenance (or maintenance-free technology).

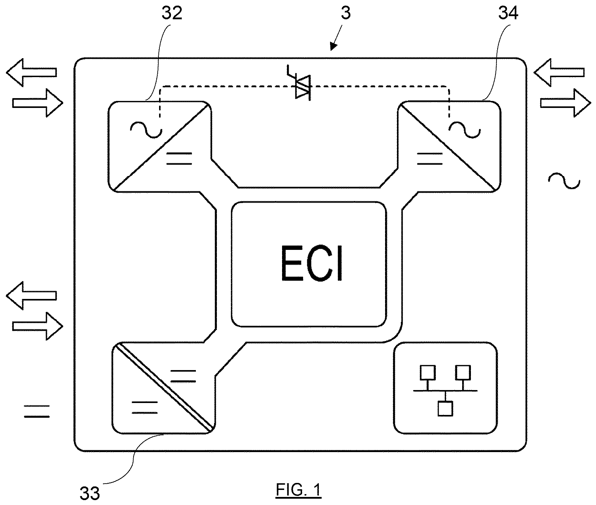

As shown in FIG. 1, each ECI module 3 has an AC bi-directional input 32 and a DC bi-directional input 33, while providing a pure sine wave output 34 that is also bi-directional.

The ECI™ is patented under US 8,044,535 B2.

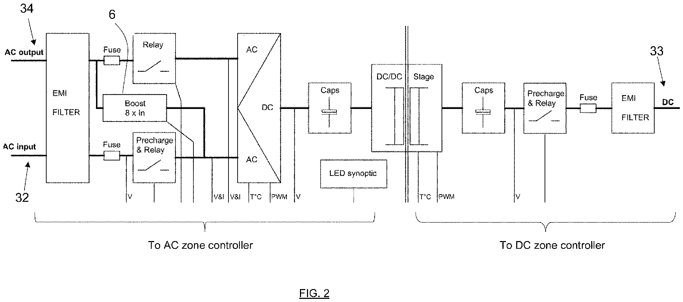

The block diagram depicted in FIG. 2 gives an explicit description of the full topology of the converter embodiment and its operation.

The power flows either from AC or DC source under the control of a DSP controller. Thanks to the converter's internal energy buffering, transferring connection of the load between two input sources is achieved instantly.

The converter is capable to detect short circuit conditions at the AC output level and activate a dedicated module having an internal so-called "boost" mode function (see US 8,379,361 B2). This mode will provide for example 4 times or 8 times the nominal current in order to clear the fault typically within 20ms, while keeping other critical loads in operation. Breaker selectivity is adapted according to the power available.

As the converter topology is with all the 3 bidirectional ports, it has the capability to absorb some power at the AC output and either transfer it to the battery or transfer it to the grid. If the grid is not present, the converter will disconnect from the grid and will operate as grid forming to continue feeding the loads connected to the systems.

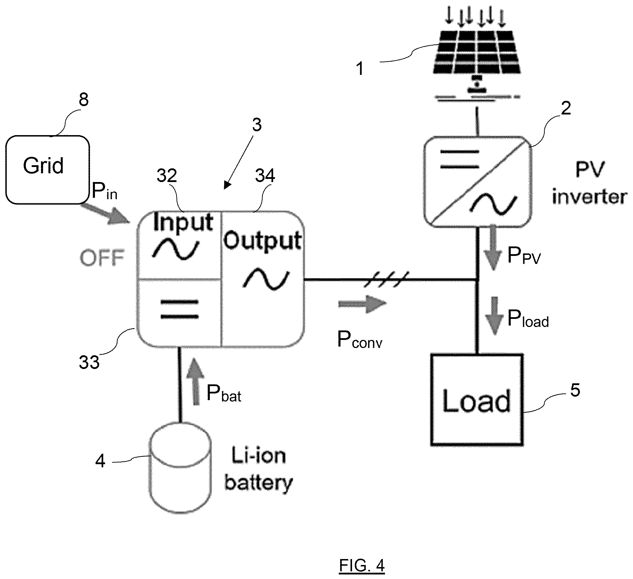

In addition, if there is a photovoltaic (PV) inverter connected to the AC load, the PV generation can continue. The schematic of the circuit is shown on FIG. 4.

If the power delivered by the PV inverter ($P_{PV}$) is greater than the power absorbed by the load ($P_{load}$) then the power at the output of the converter is negative ($P_{conv}<0$). Thus the converter naturally absorbs energy and must transfer it either to the grid ($P_{in}$) or to the battery ($P_{bat}$), without any other alternative.

At a relatively slow speed (about 5 seconds), the monitoring system gives instructions to the solar inverter and to the converter, while being able to control power.

In borderline cases (transients), power management can be problematic. This can occur for example in the following situations :

- Case 1 : the grid is absent or converter AC input is fed by a genset that cannot receive power, and the battery is suddenly disconnected ;

- Case 2: the grid is absent or converter AC input is fed by a genset that cannot receive power, and the battery is power-limited (or already loaded), and the load is suddenly shed.

A genset, short for generator set, is a combination of an engine and an electrical generator, often referred to as an alternator, in order to generate electricity. The engine within the genset can run on various fuels including diesel, gasoline, natural gas, or propane, and it powers the generator to produce electrical energy.

In both cases, converted power entering the converter ($P_{conv}$) is greater to the maximum cumulated power that can be absorbed by the grid ($P_{in}$) and the battery ($P_{bat}$). Both batteries and grid have energy absorption limits, such as loading capacity and rate, internal resistance, chemical degradation, etc. for batteries and limits related to frequency and voltage constraints, thermal capacity, etc., for the grid. The converter does not know what to do with this surplus energy, and its internal voltage soars. To protect itself, the converter must open its AC output port. This also leads to the loss of power to the loads.

## Aims of the Invention

An aim of the present invention is to optimize or enhance the performance, reliability, efficiency and adaptability of power grids and their interfaces with renewable energy sources for facilitating the transition towards a more sustainable energy production and distribution.

Another aim of this invention is, in the above configuration, to prevent loss of charge in particular cases of load shedding or sudden opening of the battery connection (e.g. Li-ion battery protection via BMS).

## Summary of the Invention

A first aspect of the present invention relates to an electric power system for controlling and improving power availability to a load, said system comprising :

- an renewable energy generating unit for producing DC power, and connected to an external non-controlled inverter ;

- an AC load ;

- an electric energy storage unit;

- a converter having a bidirectional output AC port, a DC port and, optionally, an input AC port that may be grid-interactive ;

- optionally an AC grid ;

wherein said input AC port is normally connected to the AC grid as the case may be, said bidirectional output AC port is normally connected to the external non-controlled inverter and to the load and said DC port is normally connected to the electric energy storage unit ; characterized in that the converter is equipped with an internal device which is capable to store or dissipate an energy amount otherwise entering to the converter that is at least equal to the nominal power of the converter multiplied by a predetermined time, preferably 200ms, and more preferably 300 ms.

According to preferred embodiments, the electric power system further comprises one of the following characteristics or a suitable combination thereof:

- said internal device comprises a resistor, a capacitor or a supercapacitor;

- said internal device is a power supply safety module connected in parallel to said converter between said input AC port and said output AC port, said power supply safety module being configured to protect the converter by providing an additional current limited to a multiple $\alpha$, $\alpha$ integer>1, of the nominal input current flowing in the converter ($\alpha.In_{out}$) at the output AC port, in case of detecting an excess of incoming power at or downstream of the output AC port so as to absorb, i.e. dissipate or store, the corresponding excess energy during said predetermined time ;

- the power supply safety module comprises a bidirectional switch, control means for closing said bidirectional switch and a current limiter, preferably an impedance, connected in series to said bidirectional switch to limit the current that can flow through the power supply safety module to a maximum current of $\alpha.In_{out}$, wherein $\alpha$ has a value between 5 and 20, preferably between 7 and 13, and most preferably about 10 ;

- the current limiter is a resistor $R_{boost}$ ;

- the converter is driven to generate a voltage on its input AC port to help dissipating the excess energy through the power supply safety module, according to :

$$P_{boost} = \frac{(V_{ACout} - V_{ACin})^2}{R_{boost}} \ ;$$

- the bidirectional switch is a triac ;

- the renewable energy generating unit comprises a photovoltaic, or PV, generation system, a wind generation system, a hydroelectricity generation system, a biomass generator, or fuel cells ;

- the electric energy storage unit comprises a battery ;

- the AC grid is a utility grid, such as a national grid, regional grid, microgrid, or smartgrid ;

- the DC port and the input AC port are bidirectional.

Another aspect of the present invention relates to a method for protecting the converter in the electric power system for controlling and improving power availability to a load as described above, in case an excess of incoming power is detected at the output AC port of the converter, comprising the steps of :

- detecting an excess of incoming power at or downstream of the output AC port ;

- opening a relay at the input AC port;

- closing said bidirectional switch ;

- providing an additional current corresponding to a multiple $\alpha$, $\alpha$ integer>1, of the nominal input current, $\alpha.In_{out}$, in the power backup circuit connected in parallel to the converter between the input AC port and the output AC port, wherein $\alpha$ has a value between 5 and 20, so as to dissipate the excess energy corresponding to the excess of incoming power during a predetermined time ;

- forcing shutdown of the external non-controlled inverter owing to AC voltage increase at the output AC port ;

- when the system has returned to predetermined conditions, opening said bidirectional switch ;

- closing the relay at the input AC port.

Preferably, an excess of incoming power condition to be detected is that the power flowing into the converter is greater than the sum of the power flowing into the AC grid and the power flowing into the electric energy storage unit.

Still preferably, an excess of incoming power condition to be detected is that, in case the system has no grid or has a converter AC input fed by a genset or by any power generator that cannot receive a power, the electric energy storage unit is suddenly disconnected.

Still preferably, an excess of incoming power condition to be detected is that, in case the system has no grid or has a converter AC input fed by a genset or any power generator that cannot receive power, and the electric energy storage unit is power limited or already loaded, the load is suddenly shed.

**Brief Description of the Drawings**

FIG. 1 is schematically representing a ECI™ multidirectional AC/DC/AC grid-interactive converter module.

FIG. 2 is schematically representing the detailed topology of a grid-interactive converter embodiment according to FIG. 1.

FIG. 3 is a schematic representation of a power supply safety module connected in parallel between the input AC port and the output AC port in the above grid-interactive converter.

FIG. 4 is schematically representing the whole system for managing renewable sources power transfer faults in a grid-connected converter.

**Description of a Preferred Embodiment of the Invention**

According to the present invention, in order not to lose the load in the critical cases mentioned above, the converter will be equipped with an internal device which is able to dissipate or store energy. In the present example, ECI™ can use its internal "boost" or power safety circuit 6 positioned in parallel to said power converter 3 between between power input $AC_{in}$ 32 and power output $AC_{out}$ 34 as shown in FIG. 2.

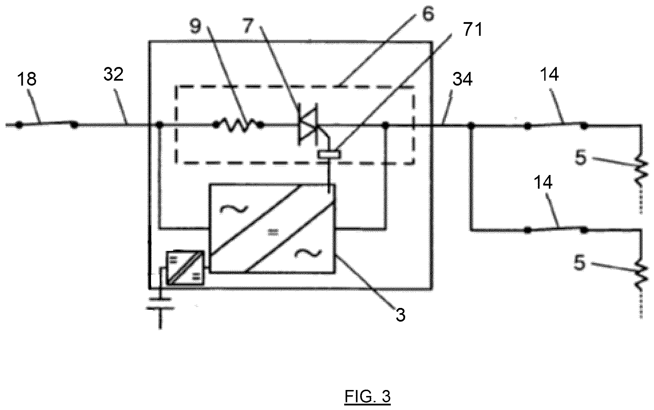

The boost circuit, described in US 8,379,361 B2, is used to dissipate any excess energy appearing in the converter. As shown in FIG. 3 in a particular embodiment, the power safety circuit 6 typically comprises a bidirectional switch 7, preferably a triac, control means 71 for closing said bidirectional switch after detecting a short circuit condition at or downstream of the AC power output 34 and a current limiter 9, preferably an impedance such as a resistor ($R_{boost}$), connected in series to said bidirectional switch 7 to limit the current that can flow through the power safety circuit 6 to a maximum current of $\alpha.In_{out}$, wherein $\alpha$ has a value roughly between 5 and 20, wherein the AC power output 34 has a nominal voltage $Vn_{out}$ and a nominal current $In_{out}$.

In case of excess of incoming power at the output AC port 34 of the converter, it will take typically 100-200ms to the inverter for taking protective measures. In the meantime, the purpose of the power supply safety circuit 6 is to absorb the surplus energy in the converter and in order to protect it.

The converter 3 will firstly open its $AC_{in}$ relay (e.g. ~7ms) to disconnect the grid 8, then activate its "boost" circuit 6. The converter 3 will further generate a voltage on its $AC_{in}$ port to help dissipating the excess energy through the "boost" circuit 6, according to :

$$P_{boost} = \frac{(V_{ACout} - V_{ACin})^2}{R_{boost}}$$

Of course, the above formula may be easily adapted in the more general case of a storage component such a classical capacitor or a supercapacitor. A supercapacitor, also called ultracapacitor or electrochemical capacitor, is a high-capacity capacitor, with a capacitance value much higher than solid-state capacitors but with lower voltage limits. It combines characteristics of both batteries and traditional capacitors, accepting and delivering charge much faster than batteries, and tolerating many more charge and discharge cycles than rechargeable batteries.

During this period, the converter will also increase its output AC voltage to force the solar inverter to shut down, according to interactive-grid standards. For example, after maximum 300ms, the solar inverter will no longer inject power into the converter's $AC_{out}$ port 34. The converter's output power will return to positive and supply only the load. The internal device which is able to dissipate/store energy (in this example, the boost circuit) will be deactivated, and the converter will be able to reconnect to its $AC_{in}$ input port 32 if available. Power will then be provided by the grid ($P_{in}$) or the battery ($P_{bat}$), depending on the configuration and power availability on the $AC_{in}$ port 32 and DC port 33.

List of reference symbols

| 1 | renewable (e.g. PV) power source |
| 2 | Inverter |
| 3 | converter |
| 32 | input AC port of converter |
| 33 | DC port of converter |
| 34 | output AC port of converter |
| 4 | battery |
| 5 | load |

| 6 | power supply safety module |
| 7 | bidirectional switch (thyristor) |
| 71 | bidirectional switch command |
| 8 | AC grid |
| 9 | impedance (resistor) |
| 14 | circuit breaker |
| 18 | circuit breaker |

Claims

1. An electric power system for controlling and improving power availability to a load (5), said system comprising :

    - an renewable energy generating unit (1) for producing DC power, and connected to an external non-controlled inverter (2) ;
    - an AC load (5) ;
    - an electric energy storage unit (4) ;
    - a converter (3) having a bidirectional output AC port (34), a DC port (33) and, optionally, an input AC port (32) that may be grid-interactive ;
    - optionally an AC grid (8) ;

    wherein said input AC port (32) is normally connected to the AC grid (8) as the case may be, said bidirectional output AC port (34) is normally connected to the inverter (2) and to the load (5) and said DC port (33) is normally connected to the electric energy storage unit (4) ;
    **characterized in that** the converter (3) is equipped with an internal device (6) which is capable to store or dissipate an energy amount otherwise entering into the converter (3) that goes up to or above the nominal power of the converter (3) multiplied by a predetermined time, preferably 200ms, and more preferably 300 ms.

2. The electric power system according to claim 1, wherein said internal device (6) comprises a resistor, a capacitor or a supercapacitor.

3. The electric power system according to claim 1, wherein said internal device (6) is a power supply safety module connected in parallel to said converter (3) between said input AC port (32) and said output AC port (34), said power supply safety module (6) being configured to protect the converter (3) by providing an additional current limited to a multiple $\alpha$, $\alpha$ integer>1, of the nominal input current flowing in the converter, $\alpha.In_{out}$, at the output AC port (34), in case of detecting an excess of incoming power condition at or downstream of the output AC port (34) so as to absorb, i.e. dissipate or store, the corresponding excess energy during said predetermined time.

**4.** The electric power system according to claim 3, wherein the power supply safety module (6) comprises a bidirectional switch (7), control means (71) for closing said bidirectional switch (7) and a current limiter (9), preferably an impedance, connected in series to said bidirectional switch (7) to limit the current that can flow through the power supply safety module (6) to a maximum current of $\alpha.\mathrm{In_{out}}$, wherein $\alpha$ has a value between 5 and 20, preferably between 7 and 13, and most preferably about 10.

**5.** The electric power system according to claim 4, wherein the current limiter (9) is a resistor $R_{boost}$.

**6.** The electric power system according to claim 5, wherein the converter (3) is driven to generate a voltage on its input AC port (32) to help dissipating the excess energy through the power supply safety module (6), according to :

$$P_{boost} = \frac{(V_{ACout} - V_{ACin})^2}{R_{boost}}$$

**7.** The electric power system according to claim 4, wherein the bidirectional switch (7) is a triac.

**8.** The electric power system according to claim 1, wherein the renewable energy generating unit (1) comprises a photovoltaic, or PV, generation system, a wind generation system, a hydroelectricity generation system, a biomass generator, or fuel cells.

**9.** The electric power system according to claim 1, wherein the electric energy storage unit (4) comprises a battery.

**10.** The electric power system according to claim 1, wherein the AC grid (8) is a utility grid, such as a national grid, regional grid, microgrid, or smartgrid.

**11.** The electric power system according to claim 1, wherein the DC port (33) and the input AC port (32) are bidirectional.

**12.** A method for protecting the converter (3) in the electric power system for controlling and improving power availability to a load (5) according to anyone of claims 3 to 11, in case an excess of incoming power is detected at the output AC port (34) of the converter (3), comprising the steps of :

   - detecting an excess of incoming power at or downstream of the output AC port (34) ;
   - opening a relay at the input AC port (32) ;
   - closing said bidirectional switch (7) ;
   - providing an additional current corresponding to a multiple $\alpha$, $\alpha$ integer>1, of the nominal input

current, $\alpha.\mathrm{In_{out}}$, in the power backup circuit (6) connected in parallel to the converter (3) between the input AC port (32) and the output AC port (34), wherein $\alpha$ has a value between 5 and 20, so as to dissipate the excess energy corresponding to the excess of incoming power during a predetermined time ;
   - forcing shutdown of the external non-controlled inverter (2) owing to AC voltage increase at the output AC port (34) ;
   - when the system has returned to predetermined conditions, opening said bidirectional switch (7) ;
   - closing the relay at the input AC port (32).

**13.** The method according to claim 12, wherein an excess of incoming power condition to be detected is that the power flowing into the converter (3) is greater than the sum of the power flowing into the AC grid (8) and the power flowing into the electric energy storage unit (4).

**14.** The method according to claim 12, wherein an excess of incoming power condition to be detected is that, in case the system has no grid (8) or has a converter AC input (32) fed by a genset or by any power generator that cannot receive power, the electric energy storage unit (4) is suddenly disconnected.

**15.** The method according to claim 12, wherein an excess of incoming power condition to be detected is that, in case the system has no grid (8) or has a converter AC input (32) fed by a genset or any power generator that cannot receive power, and the electric energy storage unit (4) is power limited or already loaded, the load (5) is suddenly shed.

FIG. 1

FIG. 2

FIG. 3

FIG. 4

Europäisches
Patentamt

European
Patent Office

Office européen
des brevets

## EUROPEAN SEARCH REPORT

**Application Number**

EP 24 21 1860

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A<br><br>A | US 6 134 124 A (JUNGREIS AARON M [US] ET AL) 17 October 2000 (2000-10-17)<br>* abstract; figures *<br>* column 2, line 1 - column 4, line 5 *<br>* column 4, line 45 - column 7, line 6 *<br>-----<br>WO 2011/141807 A2 (EATON CORP [US]; JOHNSON ROBERT W JR [US])<br>17 November 2011 (2011-11-17)<br>* abstract; figures *<br>----- | 1,3,4,<br>7-11<br>2,5,6,<br>12-15<br><br>1,12 | INV.<br>H02J3/38<br>H02J3/00<br>H02J3/32<br>H02M1/32<br>H02M5/458<br>H02M7/797<br><br>ADD.<br>H02J9/06 |

**TECHNICAL FIELDS SEARCHED (IPC)**

H02J

The present search report has been drawn up for all claims

| Place of search | Date of completion of the search | Examiner |
|---|---|---|
| Munich | 31 March 2025 | Hartmann, Martin |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

...........................................................................................

& : member of the same patent family, corresponding
   document

EPO FORM 1503 03.82 (P04C01)

EP 4 742 486 A1

## ANNEX TO THE EUROPEAN SEARCH REPORT
## ON EUROPEAN PATENT APPLICATION NO.

EP 24 21 1860

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | | Publication date | Patent family member(s) | | Publication date |
|---|---|---|---|---|---|
| US 6134124 | A | 17-10-2000 | NONE | | |
| WO 2011141807 | A2 | 17-11-2011 | CN | 102893480 A | 23-01-2013 |
| | | | EP | 2569841 A2 | 20-03-2013 |
| | | | US | 2011278931 A1 | 17-11-2011 |
| | | | US | 2013214604 A1 | 22-08-2013 |
| | | | WO | 2011141807 A2 | 17-11-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8044535 B2

- US 8379361 B2